# NEUE EUROPÄISCHE PATENTSCHRIFT

(11) **EP 1 042 086 B2**
(45) Veröffentlichungstag und Bekanntmachung des Hinweises auf die Entscheidung über den Einspruch: **18.03.2009**
(45) Hinweis auf die Patenterteilung: 16.10.2002
(21) Anmeldenummer: 98966283.8
(22) Anmeldetag: 10.12.1998
(51) Int. Cl.: B21K 5/04, B23P 15/32

(54) **VERFAHREN ZUR HERSTELLUNG EINES BOHRWERKZEUGS F?R WERKZEUGMASCHINEN**
METHOD FOR THE PRODUCTION OF A DRILLING TOOL FOR MACHINE TOOLS
PROCEDE DE PRODUCTION D'UN OUTIL DE PERCAGE POUR MACHINES-OUTILS

(30) Priorität: 22.12.1997 DE 19756795
(43) Veröffentlichungstag der Anmeldung: 11.10.2000
(73) Patentinhaber: KOMET GROUP Holding GmbH, 74354 Besigheim (DE)
(72) Erfinder: BOLKART, Dietmar, D-74321 Bietigheim-Bissingen (DE); SCHEER, Gerhard, D-74369 Löchgau (DE); BAXIVANELIS, Konstantin, D-74354 Besigheim (DE); KÖCHER, Michael, D-71638 Ludwigsburg (DE); KRUSZYNSKI, Jacek, D-70190 Stuttgart (DE)
(74) Vertreter: Wolf, Eckhard
(86) Internationale Anmeldenummer: PCT/EP1998/008041
(87) Internationale Veröffentlichungsnummer: WO 1999/032245

(56) Entgegenhaltungen:
- DE-C- 916 144
- US-A- 2 405 298
- US-A- 2 935 906
- US-A- 3 010 345
- US-A- 3 555 935

## Beschreibung

Die Erfindung betrifft ein Verfahren zur Herstellung eines Bohrwerkzeugs, in dessen Bohrerkörper mindestens eine Spanfördernut und mindestens ein Funktionskanal eingeformt wird, wobei ein rohrförmiger Rohling vorzugsweise im Kaltzustand an seiner Wandung simultan an mehreren, über den Umfang verteilt angeordneten, axial entlang der Rohlingoberfläche wandernden Segmenten mit radial oszillierenden formgebenden Umformkräften beaufschlagt und dabei die mindestens eine Spanfördernut und der mindestens eine Funktionskanal und/oder mindestens eine im Inneren des Bohrerkörpers befindliche Trennfuge gebildet wird.

Es sind Verfahren dieser Art bekannt (US 2,935,906 und US 3,010,345), bei denen zunächst geradlinige Spanfördernuten in einen Rohrrohling unter gleichzeitiger Erzeugung geradliniger Funktionskanäle in einem Umformvorgang eingebracht werden. Zur Bildung von gewendelten Spanfördemuten wird anschließend der auf diese Weise hergestellte Vorformling einer Drallverformung um seine Achse ausgesetzt. Diese Herstellungsweise führt zu Fertigungsungenauigkeiten, die nicht akzeptabel sind. Außerdem wird der hohe Fertigungsaufwand als nachteilig empfunden.

Ausgehend hiervon liegt der Erfindung die Aufgabe zugrunde, das Verfahren der eingangs angegebenen Art dahingehend zu verbessern, daß eine einfache und genaue Fertigung von Bohrwerkzeugen möglich ist.

Zur Lösung dieser Aufgabe wird die im Patentanspruch 1 angegebenen Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß der Bohrerkörper mit seinen gewendelten Spanfördernuten und Funktionskanälen in besonders einfacher Weise spanlos hergestellt werden kann. Um dies zu erreichen, wird gemäß der Erfindung vorgeschlagen, daß der Rohling während des Umformvorgangs unter der Einwirkung einer axialen Vorschubkraft und der auf ihn einwirkenden Umformkräfte selbsttätig um seine Achse gedreht wird. Die erfindungsgemäße Wendelung des Bohrerkörpers wird gemäß einer bevorzugten Ausgestaltung der Erfindung dadurch ermöglicht, daß der rohrförmige Rohling unter Erzeugung mindestens einer wendelförmigen Spanfördemut und mindestens eines wendelförmigen Funktionskanals an sowohl in axialer Richtung als auch in Umfangsrichtung entlang der Rohlingoberfläche wandernden Umformsegmenten mit den oszillierenden formgebenden Umformkräften beaufschlagt wird.

Das Umformen des rohrförmigen Rohlings zum fertigen Bohrerkörper kann grundsätzlich zwar einstufig erfolgen. Dabei tritt jedoch das Problem auf, daß an bestimmten Stellen ein relativ großer Umformungsgrad erforderlich ist, der zu einer lokalen Rißbildung führen kann. Dies gilt vor allem im Auslaufbereich der Spanfördernut. Um diesen Nachteil zu vermeiden, wird gemäß einer vorteilhaften Ausgestaltung der Erfindung vorgeschlagen, daß der Rohling stufenweise in mehreren Durchläufen umgeformt wird. Zwischen zwei Durchläufen kann der Rohling getempert oder geglüht werden, um die zuvor bei der Umformung aufgebauten Materialspannungen abzubauen.

Während des Umformvorgangs wird der Rohling zweckmäßig relativ zu den ortsfesten Umformsegmenten axial verschoben und gegebenenfalls relativ zu diesen um seine Achse gedreht. Es ist dabei möglich, den Rohling während des Umformvorgangs unter der Einwirkung einer axialen Vorschubkraft und der auf ihn einwirkenden Umformkräfte selbsttätig um seine Achse zu drehen.

Die oszillierenden Umformkräfte werden gemäß einer bevorzugten Ausgestaltung der Erfindung durch ein Knet- oder Hämmerwerk mit mehreren, sich über je eines der Umformsegmente erstreckenden Umformwerkzeugen einer Rundknetmaschine oder einer Rundhämmermaschine erzeugt. Die mindestens eine Spanfördernut wird dabei durch ein an die Kontur der betreffenden Spanfördernut angepaßtes, formgebendes Umformwerkzeug erzeugt, wobei der Auslauf der Spanfördernut am Ende einer Durchlaufstrecke durch die Einlaufkontur des formgebenden Umformwerkzeugs bestimmt wird. Der in Vorschubrichtung bewegte Rohling kann durch das in die zu erzeugende teilfertige, wendelförmige Spanfördemut eingreifende formgebende Umformwerkzeug selbsttätig um seine Achse gedreht werden. Grundsätzlich ist es auch möglich, den Rohling in Abhängigkeit von seinem axialen Verschiebeweg gegenüber dem Knet- oder Hämmerwerk um seine Achse motorisch zu drehen. Dadurch kann auch eine variable Wendelsteigung der Spanfördernut und des Funktionskanals erzeugt werden.

Gemäß einer weiteren bevorzugten Ausgestaltung der Erfindung werden an mindestens zwei in Umfangsrichtung einen Abstand voneinander aufweisenden Umformsegmenten Spanfördernuten in die Wandung des Rohlings so eingeformt, daß die Wandungspartien im Bereich zweier einander gegenüberliegender Spanfördernuten an ihrer Innenfläche unter Bildung einer Trennfuge dichtend gegeneinander anliegen. Die betreffenden Wandpartien können beim Umformvorgang im Bereich der Trennfuge miteinander kaltverschweißt werden, wenn an den kontaktierten Stellen eine chemisch aktivierte, oxidfreie Oberfläche vorhanden ist. Die beiden im Bereich der Trennfuge gegeneinander anliegenden Wandpartien können auch miteinander verlötet werden. Dazu muß vor dem Umformvorgang Lot oder Lötpaste zwischen die miteinander zu verbindenden Wandpartien eingebracht und beim oder nach dem Umformvorgang auf Schmelztemperatur erhitzt werden.

Neben dem Lötdraht oder der Lötpaste können in den Innenraum vor dem Umformvorgang auch noch andere Fremdmedien, wie Trennmittel, Dämpfungsmittel, oder eine Innenbeschichtung eingebracht werden. Ferner kann in den Rohling mindestens eine formgebende Einlage eingelegt und beim Umformvorgang in die Funktionskanäle eingebettet werden. Es können dabei stabförmige, drahtförmige, rohrförmige oder perlenkettenartige Einlagen aus Metall, Keramik, Kunststoff und/oder Polyfluortetraethylen verwendet werden. Je nach Anwendungszweck können die Einlagen in den Funktionskanälen verbleiben oder aus diesen wieder entfernt werden.

Vorteilhafterweise wird am stirnseitigen Ende des Bohrerkörpers ein Schneidkopf und am rückwärtigen Ende ein Bohrerschaft angeformt oder befestigt werden. Es ist dabei grundsätzlich möglich, daß der Schneidkopf und/oder der Bohrerschaft spanlos, vorzugsweise mit Hilfe eines Stauchwerkzeugs am Bohrerkörper angeformt wird. Alternativ dazu kann der Schneidkopf und/oder der Bohrerschaft beispielsweise durch Widerstandsschweißen und/oder durch Reibschweißen am Bohrerkörper angeschweißt werden. Auch eine Löt- oder Klebeverbindung an dieser Stelle ist möglich.

Eine weitere alternative Ausgestaltung der Erfindung sieht vor, daß der Schneidkopf und der Bohrerschaft mit mindestens einem den Bohrerkörper vorzugsweise im Bereich eines Funktionskanals durchdringenden Zuganker am Bohrerkörper befestigt werden. Der Zuganker kann dabei durch Verschrauben, Verkeilen oder durch Anstauchen gespannt werden. Weiter ist es möglich, den Zuganker durch Erwärmen und anschließendes Abkühlen vorzuspannen. Grundsätzlich kann auch ein hohl ausgebildeter Zuganker verwendet werden. Umgekehrt kann der Zuganker eine sich in einem Funktionskanal unter Freilassung äußerer Hohlräume abstützende Außenkontur aufweisen.

Das Material des fertigen Bohrerkörpers wird nach dem Umformvorgang vorteilhafterweise vergütet, gehärtet, gesintert und/oder mit einer gleitfähigen und verschleißfesten Oberflächenbeschichtung versehen.

Eine bevorzugte Ausgestaltung der Erfindung sieht vor, daß ein metallischer oder ein als Grünling aus einem sinterbaren Werkstoff ausgebildeter rohrförmiger Rohling verwendet wird.

Im folgenden wird die Erfindung anhand der Zeichnung näher erläutert. Es zeigen
- Fig. 1a: bis c ein Schema des Verfahrensablaufs bei der Herstellung eines Bohrerkörpers mit zwei Spanfördernuten und zwei Funktionskanälen;
- Fig. 2: eine schaubildliche Darstellung der für die Herstellung des Bohrerkörpers verwendeten Knetwerkzeuge;
- Fig. 3a: und b eine schaubildliche Seitenansicht und eine lokale Querschnittsdarstellung des mit dem Verfahren nach Fig. 1a bis c hergestellten Bohrerkörpers;
- Fig. 4: einen lokalen Querschnitt eines durch Rundkneten hergestellten Bohrerkörpers mit drei Spanfördernuten;
- Fig. 5a: und b je eine Explosionsdarstellung eines Bohrwerkzeugs bestehend aus Bohrerkörper, Schneidkopf und Bohrerschaft;
- Fig. 5c: eine schaubildliche Darstellung des Bohrwerkzeugs gemäß Fig. 5a und b im gefügten Zustand.

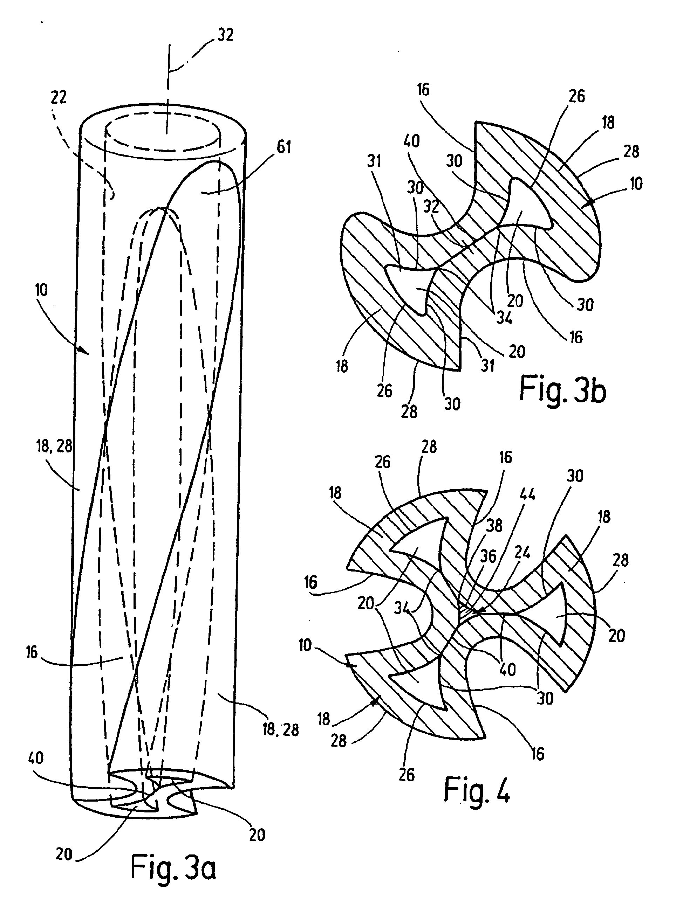

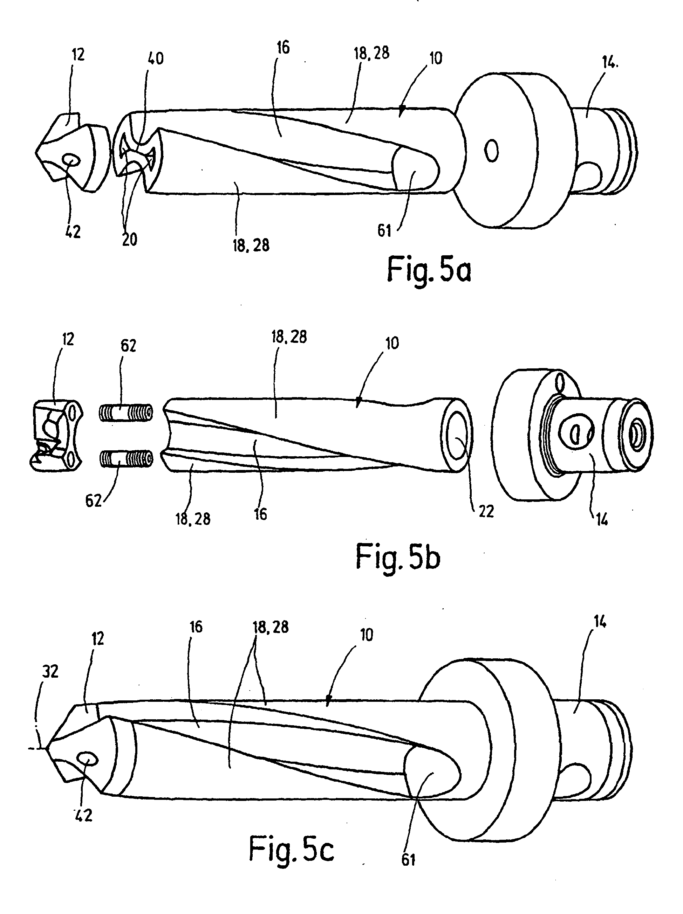

Das in der Zeichnung (Fig. 5c) dargestellte Bohrwerkzeug besteht im wesentlichen aus einem Bohrerkörper 10, einem stirnseitig am Bohrerkörper 10 angeordneten Schneidkopf 12 und einem rückwärtigen Bohrerschaft 14 zum Einspannen des Bohrwerkzeugs in einen nicht dargestellten Werkzeughalter einer Werkzeugmaschine. Der Bohrerkörper weist zwei (Fig. 3a und b) oder drei (Fig. 4) Spanfördemuten 16 auf, die an ihren Flanken durch zwei wendelförmig gekrümmte Rippen 18 begrenzt sind. Weiter sind im Bohrerkörper 10 zwei (Fig. 3a und b) bzw. drei (Fig. 4) Funktionskanäle 20 vorgesehen, die mit der gleichen Krümmung wie die Rippen 18 wendelförmig gekrümmt sind und sich entlang den Rippen 18 des Bohrerkörpers 10 erstrecken. Am schaftseitigen Ende münden die Funktionskanäle 20 stufenlos in einen gemeinsamen, achszentralen Versorgungskanal 22. Bei dem Ausführungsbeispiel nach Fig. 4 ist zusätzlich ein achszentraler Funktionskanal 24 vorgesehen, der sich entlang der Bohrerachse 32 erstreckt und in seiner Kontur wendelförmig verdrallt ist.

Wie vor allem aus den Fig. 3b und 4 zu ersehen Ist, weisen die Funktionskanäle 20 einen dreieckigen Querschnitt auf, dessen äußere Begrenzungsseite 26 eine zur teilzylindrischen Außenfläche 28 der betreffenden Rippen 18 partiell konzentrische, nach außen hin konvexe Krümmung aufweist und dessen an die äußere Begrenzungsseite 26 sich nach innen hin anschließenden inneren Begrenzungsseiten 30 zumindest partiell konkav gekrümmt sind und sich in einer zur Bohrerachse 32 weisenden Dreieckskante 34 spitzwinklig treffen. Die beiden inneren Begrenzungsseiten 30 verlaufen im wesentlichen parallel zu den jeweils benachbarten Flankenpartien 31 der Spanfördemuten 16. Der zentrale Funktionskanal 24 gemäß Fig. 4 weist drei nach außen hin konkave Begrenzungsseiten 36 auf, die an ihren spitzwinkligen Begrenzungskanten 38 zu den Dreieckskanten 34 der außen liegenden Funktionskanäle 20 gerichtet sind. Zwischen den einander zugewandten Dreieckskanten 34 gemäß Fig. 3b bzw. 34 und 38 gemäß Fig. 4 erstreckt sich eine Trennfuge 40, die parallel zum Nutengrund zweier einander benachbarter Spanfördernuten 16 verläuft und die vorzugsweise durch eine Schweiß- oder Lötbrücke verschlossen ist.

Die Funktionskanäle 20 kommunizieren mit den Austrittsöffnungen 42 im Schneidkopf 12. Sie können über den Versorgungskanal 22 mit einem Kühlund Schmiermittel beaufschlagt werden. Grundsätzlich ist es möglich, die Funktionskanäle 20,24 mit einem vorzugsweise drahtförmigen, rohrförmigen oder kabelartigen Einsatz für definierte Anwendungszwecke zu bestücken. Sie können auch mit einem Füllmittel 44, wie im Falle des Funktionskanals 24 gemäß Fig. 4, ausgefüllt werden.

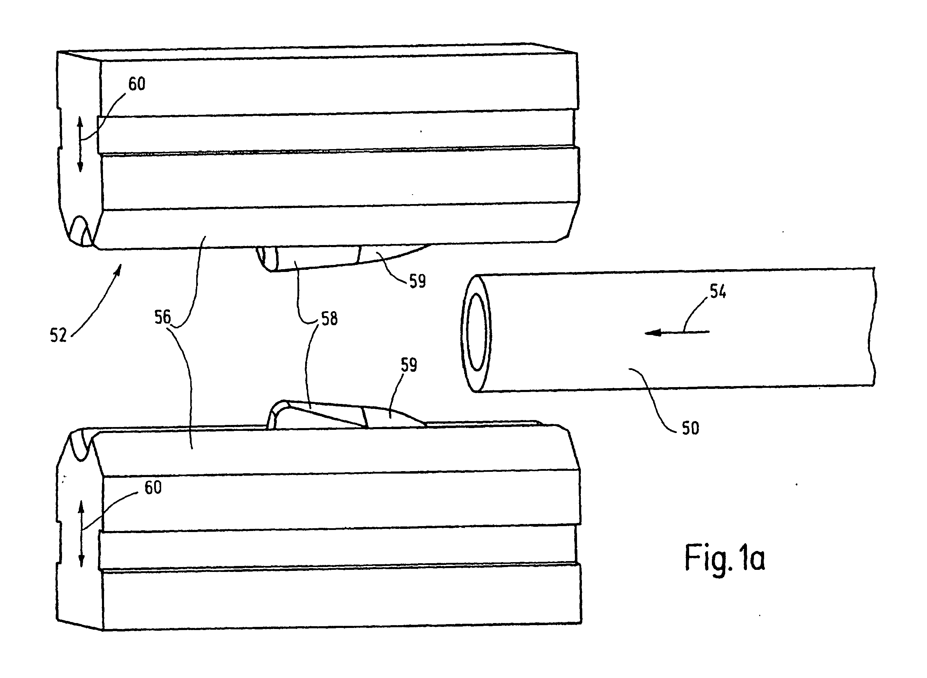

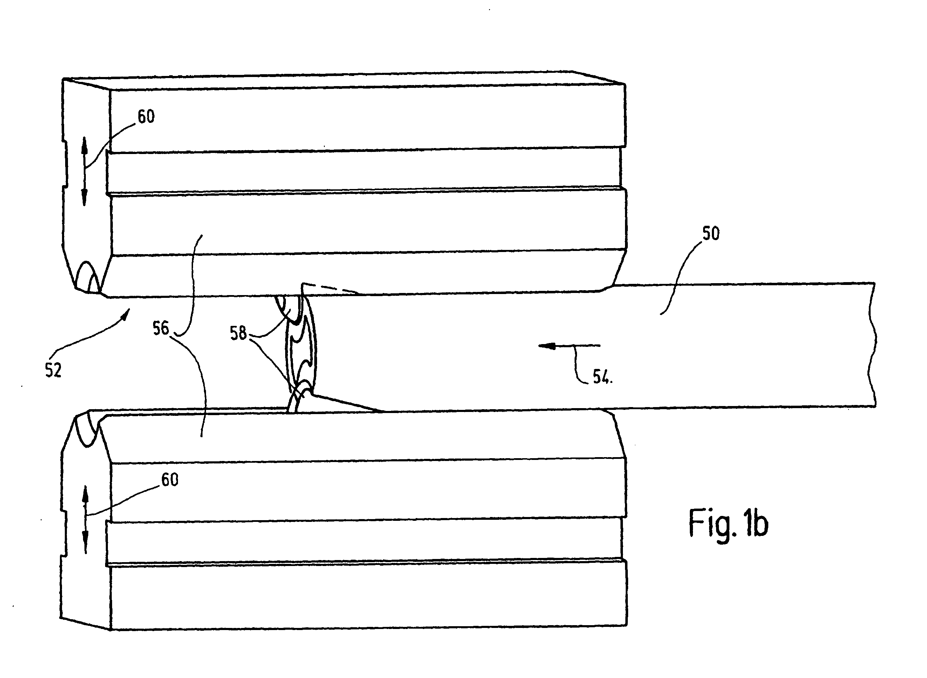

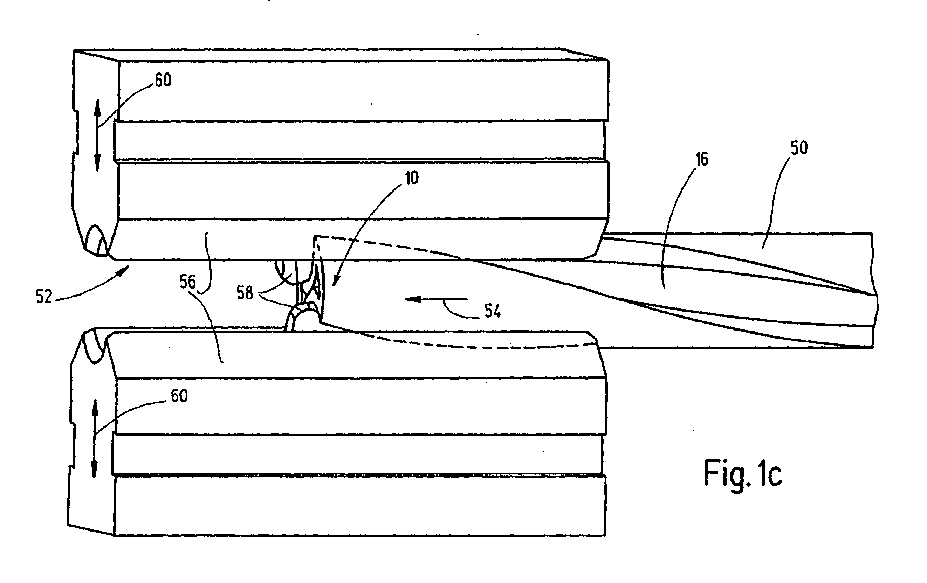

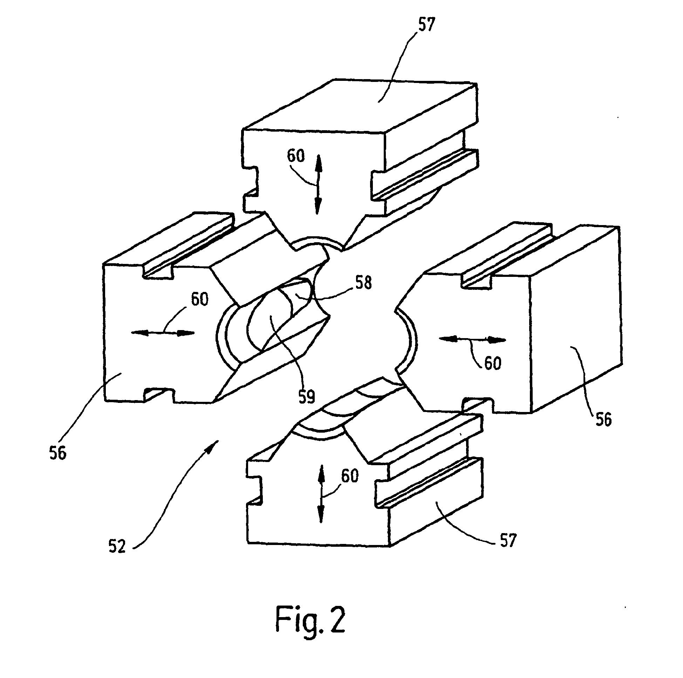

Zur Herstellung des Bohrerkörpers 10 wird ein rohrförmiger Rohling 50 aus einen umformbaren Stahl dem Knet- oder Hämmerwerk 52 einer Rundknetmaschine oder einer Rundhämmermaschine in Richtung des Pfeils 54 zugeführt. Das Knet- oder Hämmerwerk 52 weist mehrere, einen Teilumfang des Rohlings 50 umschlingende Umformwerkzeuge 56,57 auf, von denen die einander gegenüberliegenden Umformwerkzeuge 56 eine die Spanfördemuten 16 des Bohrerkörpers 10 bildende formgebende Kontur 58 aufweisen, die bei den beiden anderen, als Stützwerkzeuge ausgebildeten Umformwerkzeugen 57 fehlt. Der konisch ausgebildete Einlaufbereich 59 der formgebenden Kontur 58 sorgt einmal dafür, daß die Spanfördernuten 16 beim Durchlauf des Rohlings 50 allmählich in die Rohlingwand eingeformt werden. Zum anderen bestimmt er mit seiner konischen Kontur die Gestalt des rückwärtigen Auslaufbereichs 61 der Spanfördernuten. Wie insbesondere in Fig. 2 zu erkennen ist, sind die formgebenden Konturen 58 in den Werkzeugen 56 schräg zur Durchlaufrichtung 54 ausgerichtet, so daß der Rohling während des Durchlaufs durch die Umformwerkzeuge 56,57 im Sinne der Wendelsteigung der zu erzeugenden Spanfördernuten 16 um seine Achse gedreht wird. Die Umformwerkzeuge 56 führen in Richtung der Doppelpfeile 60 radiale Oszillationsbewegungen aus und beaufschlagen dabei die in Richtung des Pfeils 54 vorbeilaufenden Partien des Rohlings 50 mit formgebenden und kalibrierenden Umformkräften. Dabei werden sowohl die Spanfördernuten 16 als auch die innen liegenden Funktionskanäle ausgeformt. Wie aus Fig. 1b und c zu ersehen ist, erfolgt die Umformung in mehreren - bei dem gezeigten Ausführungsbeispiel in zwei - Durchläufen durch dasselbe Knet- oder Hämmerwerk 52, wobei die Umformwerkzeuge 56,57 stufenweise enger zugestellt werden. Um eine Rißbildung zu vermeiden, kann der Rohling 50 zwischen zwei Durchläufen getempert oder geglüht werden. Beim letzten Durchlauf kommen Partien der Rohlinginnenfläche im Bereich der Trennfuge 40 zur Anlage und werden dort entweder kaltverschweißt oder mit Hilfe einer zuvor eingebrachten Loteinlage verlötet. Der Lötvorgang erfolgt entweder durch die Erhitzung unter der Einwirkung der Umformwerkzeuge 56 oder durch nachträgliches Aufheizen des fertigen Bohrerkörpers. In Fig. 3a und 5a,b ist der fertige Bohrerkörper 10 dargestellt, der nur noch mit dem Schneidkopf 12 und dem Bohrerschaft 14 verbunden werden muß. Zur Herstellung der Verbindung werden die Verbindungspartner (Fig. 5a und 5b) reibverschweißt, verlötet, verklebt oder mittels Schrauben 62 (Fig. 5b) verschraubt. Auch eine Verbindung mit Hilfe von Zugankem, die den Schneidkopf 12, den Bohrerkörper 10 und den Bohrerschaft 14 durchdringen und an diesen unter Vorspannung verankert werden, ist möglich.

Zusammenfassend ist folgendes festzuhalten: Die Erfindung bezieht sich auf ein Verfahren zur Herstellung eines Bohrwerkzeugs für Werkzeugmaschinen. Das fertige Bohrwerkzeug weist mindestens eine Spanfördemut 16 und mindestens einen Funktionskanal 20 auf. Zur Herstellung des Bohrerkörpers 10 wird ein rohrförmiger metallischer Rohling 50 an seiner Wandung simultan an mehreren, über den Umfang verteilt angeordneten, axial entlang der Rohlingoberfläche wandernden Umformsegmenten mit radial oszillierenden formgebenden Umformkräften beaufschlagt, wodurch die mindestens eine Spanfördernut 16 ausgeformt und der mindestens eine Funktionskanal 20,24 gebildet wird. Wenn an mindestens zwei in Umfangsrichtung einen Abstand voneinander aufweisenden Umformsegmenten Spanfördernuten 16 in die Wandung des Rohlings 50 eingeformt werden, werden die Wandungspartien im Bereich zweier einander gegenüberliegender Spanfördernuten 16 unter Begrenzung mindestens zweier Funktionskanäle 20,24 an deren Innenfläche dichtend gegeneinander zur Anlage gebracht. Die dabei entstehende Trennfuge 40 kann durch Kaltverschweißung oder Verlöten geschlossen werden.

## Patentansprüche

1. Verfahren zur Herstellung eines Bohrwerkzeugs, in dessen Bohrerkörper (10) mindestens eine Spanfördernut (16) und mindestens ein Funktionskanal (20, 24) eingeformt wird, wobei ein rohrförmiger Rohling (50) vorzugsweise im Kaltzustand an seiner Wandung simultan an mehreren, über den Umfang verteilt angeordneten, axial entlang der Rohlingoberfläche wandernden Segmenten mit radial oszillierenden (Doppelpfeile 60) formgebenden Umformkräften beaufschlagt und dabei die mindestens eine Spanfördernut (16) und der mindestens eine Funktionskanal (20, 24) und/oder mindestens eine im Inneren des Bohrerkörpers (10) befindliche Trennfuge (40) gebildet wird, **dadurch gekennzeichnet, daß** der Rohling (50) während des Umformvorgangs unter der Einwirkung einer axialen Vorschubkraft (50) und der auf ihn einwirkenden Umformkräfte (60) selbsttätig um seine Achse (32) gedreht wird.

2. Verfahren nach Anspruch 1, **dadurch gekennzeichnet, daß** ein metallischer oder ein als Grünling aus einem sinterbaren Werkstoff ausgebildeter rohrförmiger Rohling (50) verwendet wird.

3. Verfahren nach Anspruch 1 oder 2, **dadurch gekennzeichnet, daß** der rohrförmige Rohling (50) unter Erzeugung mindestens einer wendelförmigen Spanfördernut (16) und mindestens eines wendelförmigen Funktionskanals (20) an sowohl axial als auch in Umfangsrichtung entlang der Rohlingoberfläche wandernden Umformsegmenten mit den oszillierenden formgebenden Umformkräften beaufschlagt wird.

4. Verfahren nach einem der Ansprüche 1 bis 3, **dadurch gekennzeichnet, daß** der Rohling (50) stufenweise in mehreren Durchläufen umgeformt wird (Fig. 1b und c).

5. Verfahren nach Anspruch 4, **dadurch gekennzeichnet, daß** der Rohling (50) zwischen zwei Durchläufen getempert oder geglüht wird.

6. Verfahren nach einem der Ansprüche 1 bis 5, **dadurch gekennzeichnet, daß** der Rohling (50) während des Umformvorgangs relativ zu den Umformsegmenten axial verschoben wird (Pfeil 54).

7. Verfahren nach einem der Ansprüche 1 bis 6, **dadurch gekennzeichnet, daß** der Rohling (50) während des Umformvorgangs relativ zu den Umformsegmenten um seine Achse (32) gedreht wird.

8. Verfahren nach einem der Ansprüche 1 bis 7, **dadurch gekennzeichnet, daß** die oszillierenden Umformkräfte durch ein Knet- oder Hämmerwerk (52) mit sich über je eines der Umformsegmente erstreckenden Umforrnwerkzeugen (56) einer Rundknetmaschine oder einer Rundhämmermaschine erzeugt werden.

9. Verfahren nach Anspruch 8, **dadurch gekennzeichnet, daß** die mindestens eine Spanfördernut durch ein an die Kontur der Spanfördernut angepaßtes, formgebendes Umformwerkzeug (56) erzeugt wird.

10. Verfahren nach Anspruch 9, **dadurch gekennzeichnet, daß** der Auslauf der Spanfördernut (16) am Ende einer Durchlaufstrecke durch eine Einlaufkontur des formgebenden Umformwerkzeugs (56) bestimmt wird.

11. Verfahren nach einem der Ansprüche 8 bis 10, **dadurch gekennzeichnet, daß** der in Vorschubrichtung (54) bewegte Rohling (50) durch das in die zu erzeugende, teilfertige wendelförmige Spanfördernut (16) eingreifende formgebende Umformwerkzeug (56) selbsttätig um seine Achse (32) gedreht wird.

12. Verfahren nach einem der Ansprüche 8 bis 11, **dadurch gekennzeichnet, daß** der Rohling (50) in Abhängigkeit von seinem axialen Vorschubweg gegenüber dem Knet- oder Hämmerwerk (52) um seine Achse (32) motorisch gedreht wird.

13. Verfahren nach einem der Ansprüche 1 bis 12, **dadurch gekennzeichnet, daß** an mindestens zwei in Umfangsrichtung einen Abstand voneinander aufweisenden Umformsegmenten Spanfördernuten (16) in die Wandung des rohrförmigen Rohlings (50) so eingeformt werden, daß die Wandungspartien im Bereich zweier einander gegenüberliegender Spanfördernuten (16) an ihrer Innenfläche unter Bildung einer Trennfuge (40) dichtend gegeneinander anliegen.

14. Verfahren nach Anspruch 13, **dadurch gekennzeichnet, daß** die im Bereich der Trennfuge (40) gegeneinander anliegenden Wandpartien beim Umformvorgang kaltverschweißt werden.

15. Verfahren nach Anspruch 13, **dadurch gekennzeichnet, daß** die im Bereich der Trennfuge (40) gegeneinander anliegenden Wandpartien (40) miteinander verlötet werden.

16. Verfahren nach Anspruch 15, **dadurch gekennzeichnet, daß** das für den Lötvorgang erforderliche Lot vor dem Umformvorgang auf oder zwischen die miteinander zu verbindenden Wandpartien aufgebracht oder eingelegt und beim oder nach dem Umformvorgang auf Schmelztemperatur erhitzt wird.

17. Verfahren nach einem der Ansprüche 1 bis 16, **dadurch gekennzeichnet, daß** in den Innenraum des Rohlings (50) vor dem Umformvorgang ein Fremdmedium, wie Lötdraht, Lötpaste, Trennmittel, Dämpfungsmittel oder eine Innenbeschichtung eingebracht wird.

18. Verfahren nach einem der Ansprüche 1 bis 17, **dadurch gekennzeichnet, daß** in den Rohling (50) im Bereich eines Funktionskanals (20, 24) mindestens eine Einlage eingelegt und beim Umformvorgang in den Funktionskanal eingebettet wird.

19. Verfahren nach Anspruch 18, **dadurch gekennzeichnet, daß** die Einlage nach dem Umformvorgang aus dem Funktionskanal (20, 24) entfernt wird.

20. Verfahren nach Anspruch 18 oder 19, **dadurch gekennzeichnet, daß** eine stabförmige, drahtförmige, rohrförmige oder perlkettenartige Einlage verwendet wird.

21. Verfahren nach einem der Ansprüche 18 bis 20, **dadurch gekennzeichnet, daß** eine aus Metall, Keramik, Kunststoff oder Polyfluortetraethylen bestehende Einlage verwendet wird.

22. Verfahren nach einem der Ansprüche 1 bis 21, **dadurch gekennzeichnet, daß** am stirnseitigen Ende des Bohrkörpers (10) ein Schneidkopf (12) angeformt oder befestigt wird.

23. Verfahren nach einem der Ansprüche 1 bis 22, **dadurch gekennzeichnet, daß** am rückwärtigen Ende des Bohrerkörpers (10) ein Bohrerschaft (14) angeformt oder befestigt wird.

24. Verfahren nach Anspruch 22 oder 23, **dadurch gekennzeichnet, daß** der Schneidkopf (12) und/oder der Bohrerschaft (14) vorzugsweise mit einem Stauchwerkzeug spanlos am Bohrerkörper (10) angeformt wird.

25. Verfahren nach einem der Ansprüche 22 bis 24, **dadurch gekennzeichnet, daß** der Schneidkopf (12) vorzugsweise durch Widerstandsschweißen am Bohrerkörper (10) angeschweißt wird.

26. Verfahren nach einem der Ansprüche 22 bis 25, **dadurch gekennzeichnet, daß** der Bohrerschaft (14) vorzugsweise durch Reibschweißen am Bohrerkörper (10) angeschweißt wird.

27. Verfahren nach einem der Ansprüche 22 bis 26, **dadurch gekennzeichnet, daß** der Schneidkopf (12) und/oder der Bohrerschaft (14) am Bohrerkörper (10) angelötet oder angeklebt wird.

28. Verfahren nach Anspruch 22 oder 23, **dadurch gekennzeichnet, daß** der Schneidkopf (12) und der Bohrerschaft (14) mit mindestens einem den Bohrerkörper (10) vorzugsweise im Bereich eines Funktionskanals durchdringenden Zuganker am Bohrerkörper (10) befestigt wird.

29. Verfahren nach Anspruch 28, **dadurch gekennzeichnet, daß** der Zuganker durch Verschrauben, Verkeilen oder Stauchen gespannt wird.

30. Verfahren nach Anspruch 28, **dadurch gekennzeichnet, daß** der Zuganker durch Erhitzen und anschließendes Abkühlen gespannt wird.

31. Verfahren nach einem der Ansprüche 28 bis 30, **dadurch gekennzeichnet, daß** ein hohl ausgebildeter Zuganker verwendet wird.

32. Verfahren nach einem der Ansprüche 28 bis 31, **dadurch gekennzeichnet, daß** der Zuganker eine sich im Funktionskanal (20, 24) unter Freilassung äußerer Hohlräume abstützende Außenkontur aufweist.

33. Verfahren nach einem der Ansprüche 1 bis 32, **dadurch gekennzeichnet, daß** das Material des Bohrerkörpers nach dem Umformvorgang vergütet, gehärtet, gesintert oder mit einer Oberflächenbeschichtung versehen wird.

## Claims

1. A method for the production of a drilling tool, into the body of the drill (10) of which is formed at least one chip conveyor groove (16) and at least one functional channel (20, 24), whereby a tubular blank (50), preferably in the cold state, is loaded on its wall simultaneously on several segments distributed over the periphery and moving axially along the blank surface with radially oscillating (double arrows 60) shaping forming forces, thereby forming at least one chip conveyor groove (16) and at least one functional channel (20, 24) and/or at least one joint (40) provided inside of the body of the drill (10), **characterized in that** the blank (50) is automatically rotated about its axis (32) during the forming process under the action of an axial feed force (50) and the forming forces (60) acting thereon.

2. The method according to Claim 1, **characterized in that** a metal tubular blank (50) or a tubular blank (50) constructed as a raw product out of a sinterable material is used.

3. The method according to Claim 1 or 2, **characterized in that** the tubular blank (50) is loaded with the oscillating shaping forming forces on forming segments moving both axially and also in peripheral direction along the blank surface, thereby producing at least one helically shaped chip conveyor groove (16) and at least on helically shaped functional channel (20).

4. The method according to one of the Claims 1 to 3, **characterized in that** the blank (50) is formed in steps in several passages (Figures 1 b and c).

5. The method according to Claim 4, **characterized in that** the blank (50) is tempered and annealed between two passages.

6. The method according to one of the Claims 1 to 5, **characterized in that** the blank (50) is axially moved (arrow 54) relative to the forming segments during the forming process.

7. The method according to one of the Claims 1 to 6, **characterized in that** the blank (50) is rotated about its axis (32) relative to the forming segments during the forming process.

8. The method according to one of the Claims 1 to 7, **characterized in that** the oscillating forming forces are produced by a kneading and hammering works (52) with forming tools of rotary kneading or a rotary hammering machine, which forming tools extend over each one of the forming segments.

9. The method according to Claim 8, **characterized in that** at least one chip conveyor groove is produced by a shaping forming tool (56) adapted to the contour of the chip conveyor groove.

10. The method according to Claim 9, **characterized in that** the outlet of the chip conveyor groove (16) at the end of a passage path is determined by an inlet contour of the shaping forming tool (56).

11. The method according to one of the Claims 8 to 10, **characterized in that** the blank moved in feed direction (54) is automatically rotated about its axis (32) by the shaping forming tool (56), which engages the partially finished helically shaped chip conveyor groove (16), which is to be produced.

12. The method according to one of the Claims 8 to 11, **characterized in that** the blank (50) is rotated by a motor about its axis (32) relative to the kneading or hammering works (52) in dependency of its axial feed path.

13. The method according to one of the Claims 1 to 12, **characterized in that** chip conveyor grooves (16) are formed on at least two forming segments, which are spaced from one another in peripheral direction, into the wall of the tubular blank (50) in such a manner that the wall portions in the area of two opposite-lying chip conveyor grooves (16) sealingly abut one another on their inner surface thereby defining a joint (40).

14. The method according to Claim 13, **characterized in that** the wall portions, which abut one another in the area of the joint (40), are cold-welded during the forming process.

15. The method according to Claim 13, **characterized in that** the wall portions (40), which abut one another in the area of the joint (40), are soldered to one another.

16. The method according to Claim 15, **characterized in that** the solder needed for the soldering process is applied or inserted prior to the forming process onto or between the wall portions, which are to be connected with one another, and is heated to fusion or melting temperature during or after the forming process.

17. The method according to one of the Claims 1 to 16, **characterized in that** a foreign medium, like solder wire, solder paste, separating means, damping means or an inner coating, is placed into the inside of the blank (50) prior to the forming process.

18. The method according to Claim 1 to 17, **characterized in that** at least one insert is placed into the blank (50) in the area of a functional channel (20, 24), and is embedded in said functional channel during the forming process.

19. The method according to Claim 18, **characterized in that** the insert is removed from the functional channel (20, 24) after the forming process.

20. The method according to Claim 18 or 19, **characterized in that** a rod-shaped, wire-shaped, tubular or pearl-chainlike insert is used.

21. The method according to one of the Claims 18 to 20, **characterized in that** an insert consisting of metal, ceramics, plastic or polyfluorotetraethylene is used.

22. The method according to one of the Claims 1 to 21, **characterized in that** a cutting head (12) is formed on or secured to the front-side end of the body of the drill (10).

23. The method according to one of the Claims 1 to 22, **characterized in that** a drill shank (14) is formed on or secured to the rearward end of the body of the drill (10).

24. The method according to Claim 22 or 23, **characterized in that** the cutting head (12) and/or the drill shank (14) are chiplessly formed on the body of the drill (10) preferably by a swage.

25. The method according to one of the Claims 22 to 24, **characterized in that** the cutting head (12) is welded to the body of the drill (10) preferably by resistance welding.

26. The method according to one of the Claims 22 to 25, **characterized in that** the drill shank (14) is welded to the body of the drill (10) preferably by friction welding.

27. The method according to one of the Claims 22 to 26, **characterized in that** the cutting head (12) and/or the drill shank (14) are soldered or glued to the body of the drill (10).

28. The method according to Claim 22 or 23, **characterized in that** the cutting head (12) and the drill shank (14) are fastened with at least one tie rod to the body of the drill (10), which tie rod penetrates through the body of the drill (10) preferably in the area of a functional channel.

29. The method according to Claim 28, **characterized in that** the tie rod is tensioned by screwing, wedging or compressing.

30. The method according to Claim 28, **characterized in that** the tie rod is tensioned by heating and subsequent cooling off.

31. The method according to one of the Claims 28 to 30, **characterized in that** a tie rod having a hollow design is used.

32. The method according to one of the Claims 28 to 31, **characterized in that** the tie rod has an outer contour supported in the functional channel (20, 24) thereby leaving outer cavities open.

33. The method according to one of the Claims 1 to 32, **characterized in that** the material of the body of the drill is after the forming process heat-treated, hardened, sintered or is provided with a surface coating.

## Revendications

1. Procédé de production d'un outil de perçage, dans le corps de perçoir (10) duquel sont pratiqués au moins une rainure (16) d'évacuation des copeaux et au moins un canal fonctionnel (20, 24), procédé dans lequel une ébauche tubulaire (50) est simultanément sollicitée sur sa paroi, de préférence à froid, par des forces de déformation à oscillation radiale (flèches 60 à double pointe) et à effet de mise en forme, sur plusieurs segments agencés avec répartition sur le pourtour et migrant axialement le long de la surface de ladite ébauche, avec façonnage concomitant de la rainure (16) d'évacuation des copeaux, prévue au minimum, et du canal fonctionnel (20, 24) prévu au minimum, et/ou d'au moins un interstice (40) situé à l'intérieur du corps de perçoir (10), **caractérisé par le fait que** l'ébauche (50) est automatiquement animée d'une rotation autour de son axe (32), au cours du processus de mise en forme, sous l'action d'une force axiale d'avance (50) et des forces de déformation (60) qui lui sont appliquées.

2. Procédé selon la revendication 1, **caractérisé par** l'utilisation d'une ébauche métallique, ou d'une ébauche tubulaire (50) réalisée sous la forme d'un compact vert en un matériau apte au frittage.

3. Procédé selon la revendication 1 ou 2, **caractérisé par le fait que** l'ébauche tubulaire (50) est sollicitée par les forces oscillatoires de déformation à effet de mise en forme, avec façonnage d'au moins une rainure hélicoïdale (16) d'évacuation des copeaux, et d'au moins un canal fonctionnel hélicoïdal (20), sur des segments de déformation migrant le long de la surface de ladite ébauche, aussi bien dans le sens axial que dans le sens périphérique.

4. Procédé selon l'une des revendications 1 à 3, **caractérisé par le fait que** l'ébauche (50) est déformée graduellement en plusieurs passages (figures 1b et c).

5. Procédé selon la revendication 4, **caractérisé par le fait que** l'ébauche (50) est trempée ou recuite entre deux passages.

6. Procédé selon l'une des revendications 1 à 5, **caractérisé par le fait que**, durant le processus de mise en forme, l'ébauche (50) est animée de coulissements axiaux (flèche 54) vis-à-vis des segments de déformation.

7. Procédé selon l'une des revendications 1 à 6, **caractérisé par le fait que**, durant le processus de mise en forme, l'ébauche (50) est animée d'une rotation autour de son axe (32), vis-à-vis des segments de déformation.

8. Procédé selon l'une des revendications 1 à 7, **caractérisé par le fait que** les forces oscillatoires de déformation sont engendrées par un mécanisme (52) de forgeage ou de matriçage, comportant des outils de déformation (56) s'étendant respectivement sur l'un des segments de déformation, et faisant partie d'une machine de forgeage rotatif ou d'une machine de matriçage rotatif.

9. Procédé selon la revendication 8, **caractérisé par le fait que** la rainure d'évacuation des copeaux, prévue au minimum, est façonnée par un outil de déformation (56) à effet de mise en forme, adapté au profil de ladite rainure d'évacuation des copeaux.

10. Procédé selon la revendication 9, **caractérisé par le fait que** la sortie de la rainure (16) d'évacuation des copeaux est déterminée, à l'extrémité d'un trajet de défilement, par un profil d'entrée de l'outil de déformation (56) à effet de mise en forme.

11. Procédé selon l'une des revendications 8 à 10, **caractérisé par le fait que** l'ébauche (50), mise en mouvement dans la direction d'avance (54), est automatiquement animée d'une rotation, autour de son axe (32), par l'outil de déformation (56) à effet de mise en forme qui pénètre dans la rainure hélicoïdale (16) d'évacuation des copeaux, partiellement achevée et devant être façonnée.

12. Procédé selon l'une des revendications 8 à 11, **caractérisé par le fait que** l'ébauche (50) est animée d'une rotation motorisée, autour de son axe (32), en fonction de sa course d'avance axiale vis-à-vis du mécanisme (52) de forgeage ou de matriçage.

13. Procédé selon l'une des revendications 1 à 12, **caractérisé par le fait que** des rainures (16) d'évacuation des copeaux sont ménagées dans la paroi de l'ébauche tubulaire (50), sur au moins deux segments de déformation distants l'un de l'autre dans le sens périphérique, de façon telle que les parties de ladite paroi soient réciproquement en contact avec étanchéité sur leur face interne, en formant un interstice (40), dans la région de deux rainures (16) d'évacuation des copeaux qui se font mutuellement face.

14. Procédé selon la revendication 13, **caractérisé par le fait que** les parties de la paroi, réciproquement en contact dans la région de l'interstice (40), sont soudées à froid au cours du processus de mise en forme.

15. Procédé selon la revendication 13, **caractérisé par le fait que** les parties de la paroi (40), réciproquement en contact dans la région de l'interstice, sont solidarisées par brasage.

16. Procédé selon la revendication 15, **caractérisé par le fait que**, préalablement au processus de mise en forme, la brasure nécessaire à l'opération de brasage est déposée sur ou insérée entre les parties de la paroi devant être solidarisées, et est chauffée jusqu'à la température de fusion pendant ou après ledit processus de mise en forme.

17. Procédé selon l'une des revendications 1 à 16, **caractérisé par le fait qu'**une substance étrangère, telle qu'un fil métallique à braser, une pâte à braser, un agent de séparation, un agent d'évaporation ou un revêtement intérieur, est déposée dans l'espace interne de l'ébauche (50) préalablement au processus de mise en forme.

18. Procédé selon l'une des revendications 1 à 17, **caractérisé par le fait qu'**au moins une garniture intégrée est insérée dans l'ébauche (50), dans la région d'un canal fonctionnel (20, 24), et est noyée dans ledit canal fonctionnel au cours du processus de mise en forme.

19. Procédé selon la revendication 18, **caractérisé par le fait que** la garniture intégrée est enlevée du canal fonctionnel (20, 24) à l'issue du processus de mise en forme.

20. Procédé selon la revendication 18 ou 19, **caractérisé par le fait qu'**on utilise une garniture intégrée en forme de barreau, en forme de fil métallique, en forme de tube ou du type collier de perles.

21. Procédé selon l'une des revendications 18 à 20, **caractérisé par le fait qu'**on utilise une garniture intégrée consistant en un métal, en une céramique, en une matière plastique ou en du polytétrafluoréthylène.

22. Procédé selon l'une des revendications 1 à 21, **caractérisé par le fait qu'**une tête de coupe (12) est ménagée d'un seul tenant sur l'extrémité frontale du corps de perçoir (10), ou est fixée à ladite extrémité.

23. Procédé selon l'une des revendications 1 à 22, **caractérisé par le fait qu'**un arbre (14) de foret est ménagé d'un seul tenant sur l'extrémité postérieure du corps de perçoir (10), ou est fixé à ladite extrémité.

24. Procédé selon la revendication 22 ou 23, **caractérisé par le fait que** la tête de coupe (12) et/ou l'arbre (14) de foret est/sont ménagé(e)(s) d'un seul tenant sur le corps de perçoir (10), sans enlèvement de copeaux, de préférence à l'aide d'un outil de refoulement.

25. Procédé selon l'une des revendications 22 à 24, **caractérisé par le fait que** la tête de coupe (12) est rapportée par soudage sur le corps de perçoir (10), de préférence par soudage résistif.

26. Procédé selon l'une des revendications 22 à 25, **caractérisé par le fait que** l'arbre (14) de foret est rapporté par soudage sur le corps de perçoir (10), de préférence par soudage par friction.

27. Procédé selon l'une des revendications 22 à 26, **caractérisé par le fait que** la tête de coupe (12) et/ou l'arbre (14) de foret est/sont rapporté(e)(s) par brasage ou par collage sur le corps de perçoir (10).

28. Procédé selon la revendication 22 ou 23, **caractérisé par le fait que** la tête de coupe (12) et l'arbre (14) de foret sont fixés au corps de perçoir (10) à l'aide d'au moins un tirant d'ancrage traversant, de préférence, ledit corps de perçoir (10) dans la région d'un canal fonctionnel.

29. Procédé selon la revendication 28, **caractérisé par le fait que** le tirant d'ancrage est bloqué par vissage, clavetage ou refoulement.

30. Procédé selon la revendication 28, **caractérisé par le fait que** le tirant d'ancrage est bloqué par chauffage et par refroidissement consécutif.

31. Procédé selon l'une des revendications 28 à 30, **caractérisé par le fait qu'**on utilise un tirant d'ancrage de réalisation creuse.

32. Procédé selon l'une des revendications 28 à 31, **caractérisé par le fait que** le tirant d'ancrage possède un profil extérieur prenant appui, dans le canal fonctionnel (20, 24), en réservant des cavités extérieures.

33. Procédé selon l'une des revendications 1 à 32, **caractérisé par le fait que**, à l'issue du processus de mise en forme, le matériau du corps de perçoir est trempé, durci, fritté ou pourvu d'un revêtement de surface.
